# EUROPEAN PATENT APPLICATION

(11) **EP 4 195 062 A1**
(43) Date of publication of application: **14.06.2023**
(21) Application number: 22206082.4
(22) Date of filing: 08.11.2022
(51) Int. Cl.: G06F 15/80

(54) **METHOD AND APPARATUS FOR SEPARABLE CONVOLUTION FILTER OPERATIONS ON MATRIX MULTIPLICATION ARRAYS**

(30) Priority: 10.12.2021 US 202117548344
(71) Applicant: Intel Corporation, Santa Clara, CA 95054 (US)
(72) Inventor: Espig, Michael, Newberg, OR 97132 (US); Aggarwal, Deepti, Gilbert, AZ 85233 (US)
(74) Representative: Samson & Partner Patentanwälte mbB

(57) **Abstract**

Methods and apparatus relating to separable convolution filter operations on matrix multiplication arrays are described. In an embodiment, logic circuitry generates a first convolution kernel and a second convolution kernel based on a two-dimensional convolution kernel. A matrix processing array comprising a plurality of Fused Multiply-Add (FMA) blocks applies the first convolution kernel to input data during a first pass to generate an intermediate data and the matrix processing array applies the second convolution kernel to the intermediate data to generate output data. Other embodiments are also disclosed and claimed.

## Description

### FIELD

The present disclosure generally relates to the field of electronics. More particularly, an embodiment relates to separable convolution filter operations on matrix multiplication arrays.

### BACKGROUND

Matrix processing arrays have become increasingly popular in Artificial Intelligence (AI) based accelerators, e.g., acting as a special case of systolic array architectures, and as such have limited internal communications networks and execution capabilities. Matrix processing systolic arrays can generally gain performance by only supporting simple General Matrix-Matrix (GEMM) operations on two input arrays. This approach, however, fails to efficiently support image processing filters since their operation involves shifting the filter by a single element in each time step, resulting in a large set of input images.

While such an approach may allow for reuse of a large amount of data and may allow for performance of multiple operations on the same element due to the nature of incremental shifts in each dimension, at least in part, because of the size of the input array/image, caching and re-use may be not be achievable in an efficient manner.

Accordingly, such techniques may pose performance, complexity, and/or power consumption issues.

### BRIEF DESCRIPTION OF THE DRAWINGS

The detailed description is provided with reference to the accompanying figures. In the figures, the left-most digit(s) of a reference number identifies the figure in which the reference number first appears. The use of the same reference numbers in different figures indicates similar or identical items.
FIG. 1 illustrates circuit diagram of a sample Fused Multiply-Add (FMA) block, which may be utilized in various embodiments.
FIG. 2 illustrates a block diagram of a matrix processing array with cross-channel input support for image processing filters, according to an embodiment.
FIG. 3 illustrates sample separable convolution operations, according to an embodiment.
FIG. 4 illustrates implementation and operation of a sample 3x3 separable convolution filter on an image processing filter array, according to an embodiment.
FIG. 5A is a block diagram illustrating an exemplary instruction format according to embodiments.
FIG. 5B is a block diagram illustrating the fields of the instruction format that make up the full opcode field according to one embodiment.
FIG. 5C is a block diagram illustrating the fields of the instruction format that make up the register index field according to one embodiment.
FIG. 5D is a block diagram illustrating the fields of the instruction format that make up the augmentation operation field according to one embodiment.
FIG. 6 is a block diagram of a register architecture according to one embodiment.
FIG. 7A is a block diagram illustrating both an exemplary in-order pipeline and an exemplary register renaming, out-of-order issue/execution pipeline according to embodiments.
FIG. 7B is a block diagram illustrating both an exemplary embodiment of an in-order architecture core and an exemplary register renaming, out-of-order issue/execution architecture core to be included in a processor according to embodiments.
FIG. 8 illustrates a block diagram of an SOC (System On Chip) package in accordance with an embodiment.
FIG. 9 is a block diagram of a processing system, according to an embodiment.
FIG. 10 is a block diagram of an embodiment of a processor having one or more processor cores, according to some embodiments.
FIG. 11 is a block diagram of a graphics processor, according to an embodiment.

### DETAILED DESCRIPTION

In the following description, numerous specific details are set forth in order to provide a thorough understanding of various embodiments. However, various embodiments may be practiced without the specific details. In other instances, well-known methods, procedures, components, and circuits have not been described in detail so as not to obscure the particular embodiments. Further, various aspects of embodiments may be performed using various means, such as integrated semiconductor circuits ("hardware"), computer-readable instructions organized into one or more programs ("software"), or some combination of hardware and software. For the purposes of this disclosure reference to "logic" shall mean either hardware (such as logic circuitry or more generally circuitry or circuit), software, firmware, or some combination thereof.

As mentioned above, matrix processing arrays have become increasingly popular in Artificial Intelligence (AI) based accelerators, e.g., acting as a special case of systolic array architectures. as such have limited internal communications networks and execution capabilities. Operations for matrix processing systolic arrays can generally gain performance by only supporting simple General Matrix-Matrix (GEMM) operations on two input arrays. This architecture, however, does not support image processing filters since their operation involves shifting the filter by a single element in each time step, resulting in a large set of input images.

This architecture, however, does not support image processing filters either as two-dimensional (2D) operations or as matrix-vector solutions (such as separable convolution filters) since their operation involves shifting the filter by a single element in each time step, resulting in a large set of input images, all based on the same original image, each shifted subsequently by one element. This continues across the width of the image, then the entire operation is repeated for each subsequent line of the image, each time shifted one element down. While such an algorithm may reuse a large amount of data and performs multiple operations on the same element due to the nature of incremental shifts in each dimension, in part, because of the size of the input array/image, caching and re-use may be impossible to achieve in a reasonable manner.

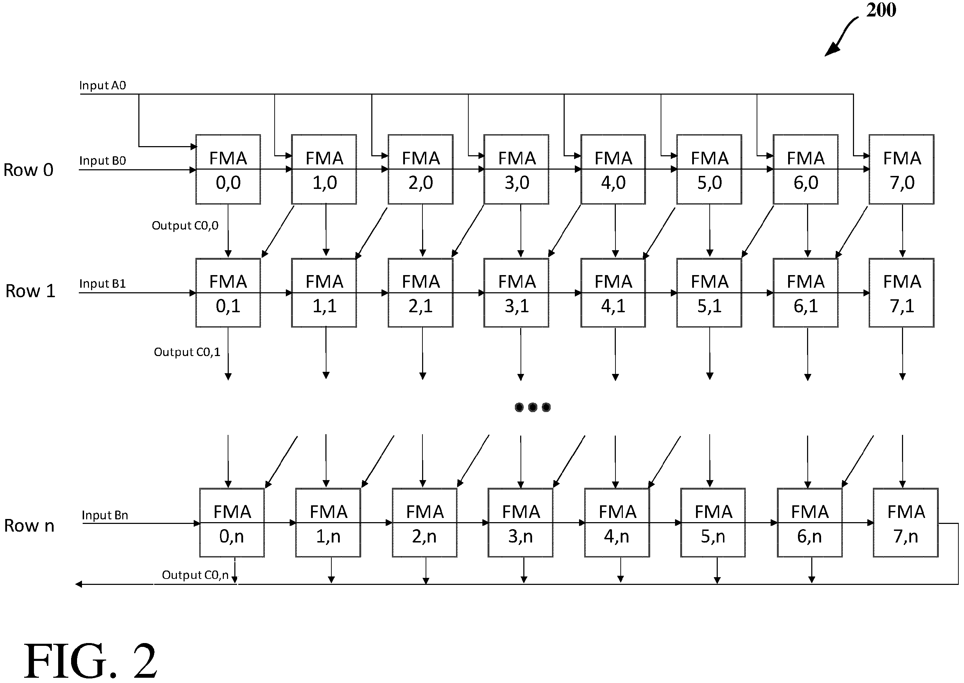

To address at least some of these issues, one or more embodiments provide techniques for separable convolution filter operations on matrix multiplication arrays. As discussed herein, a "convolution filter operation" generally refers to the convolution operation between an image and a filter kernel (e.g., in the form of a matrix). In an embodiment, a filter kernel can be decomposed into an equivalent separable convolution filter/kernel (see, e.g., Fig. 2). At least one embodiment provides an efficient method and/or apparatus for supporting separable convolution algorithms on a matrix processing array that supports multiple derivative types of image processing filters. Supporting the separable convolution kernel(s) on a matrix processing array can deliver exponential performance over state-of-the-art vector-based approaches. As discussed herein, a "convolution kernel" generally refers to a small matrix used to modify the frequency response of an input signal. As an example, a convolution kernel may be used for blurring, sharpening, edge detection, and other matrix processing functions across multiple applications and/or domains.

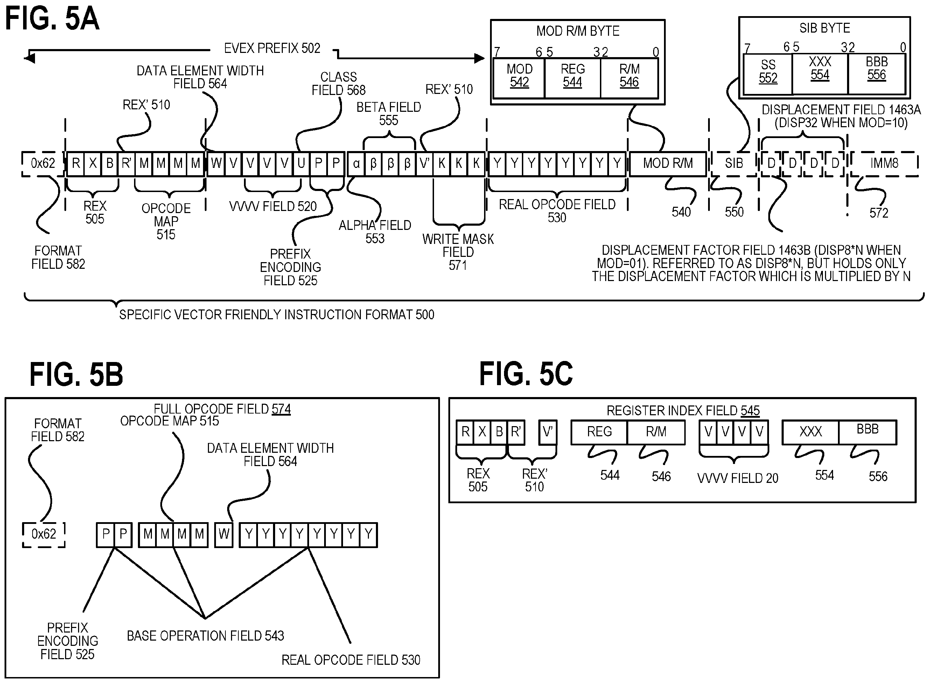

Further, in some embodiments, one or more instructions may be utilized to configure, load, execute, and/or store the separable filter(s) on a matrix processing array. In at least some embodiments, one or more of the instructions discussed herein may follow the instruction format discussed with reference to FIGs. 5A-5D.

By contrast, some implementations may involve the decomposition of 2D matrix operations to a sequence of vector instructions supported on a defined processor. Such implementations involve the decomposition of the operation from a matrix-matrix algorithm to a sequence of vector operations. This involves execution of a significant number of instructions (such as one for every Fused Multiply-Add (FMA) operation of the algorithm), which is significantly slower than a systolic approach. In addition, intermediate values are required to be stored and reloaded, which generates delay, consumes a significant amount of power and area for both the operation(s) and the memory storage task(s)/block(s).

In one embodiment, an Instruction Set Architecture (ISA), or more generally an instruction, and/or microarchitecture for efficiently supporting image processing filters on matrix processing arrays are provided. An embodiment utilizes separable convolution approaches for (e.g., small) kernels by extending state of the art matrix processing arrays of FMA units through the addition of unidirectional cross-channel communication between the FMA units and intermediate row store operations along with instructions for configuring and executing the filter operations.

Moreover, filtering is one of the most commonly used operations in image processing, filtering, and encoder/decoder applications in video processing. Image processing and encoding has become critical due to the increase in on-demand, streaming and other video media usage cases and, when combined with high-definition streams, requires significant processing capability.

To this end, at least one embodiment provides an efficient method to deliver significant performance upside for machine learning kernels, filtering/detection algorithms and is expected to be used broadly across H.264/MPEG-4 AVC (such as x264), ISO/IEC MPEG and ITU-T VCEG (such as x265), Scalable Video Technology (SVT), future codec (coder/decoder), video quality checkers (such as Video Multimethod Assessment Fusion (VMAF)), and most image processing applications. Increasing the performance and efficiency of a convolution kernel will provide a competitive advantage to an implementing company even when compared to other Graphics Processor Unit (GPU) and accelerator architectures.

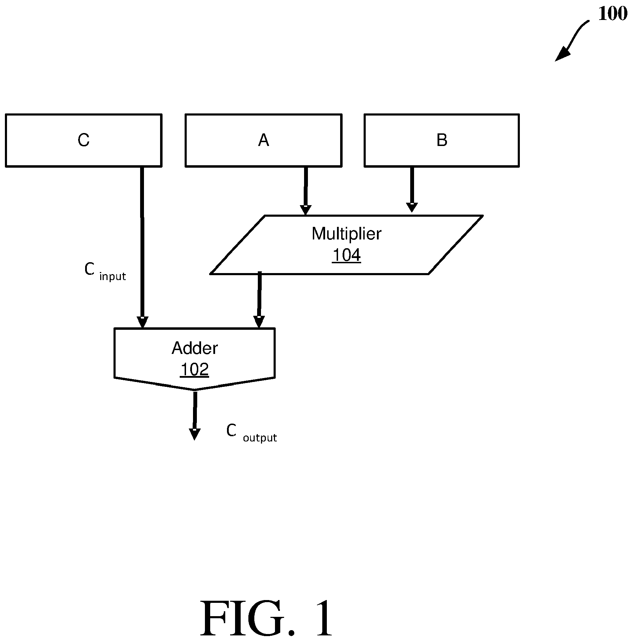

FIG. 1 illustrates circuit diagram of a sample Fused Multiply-Add (FMA) block 100, which may be utilized in various embodiments. As shown, the FMA block includes an adder logic 102 and a multiplier logic 104. Hence, the output Cₒᵤₜₚᵤₜ is the result of addition of input C (Cᵢₙₚᵤₜ) to the multiplication of inputs A and B. As discussed herein, an "FMA block" consists of a circuit minimally comprised of an adder and a multiplier operating in a fused fashion. Additional capabilities in the FMA block may include rounding, truncation, or additional accumulation.

FIG. 2 illustrates a block diagram of a matrix processing array 200 with cross-channel input support for image processing filters, according to an embodiment. In at least one embodiment, the FMA blocks used in FIG. 2 are the same or similar to the FMA block 100 of FIG. 1. Additionally, the matrix processing array 200 may be a systolic array in an embodiment. As discussed herein, a "systolic array" generally refers to a plurality of tightly coupled data processing modules (sometimes called cells or nodes) that independently perform computational (partial or complete) tasks to allow for parallel computing. The data processing modules may communicate with their neighbors (or any other processing element on the chip) to facilitate transmission of tasks or data.

Referring to FIGS. 1-2, an embodiment extends the architecture of the matrix processing array of FMA units through: (1) the addition of row store capabilities on a subset or all the rows of a matrix processing array; and (2) the ability to reset or set to zero the accumulated Cᵢₙₚᵤₜ value at a configurable offset for the matrix FMA element operation "Cₒᵤₜₚᵤₜ = Cᵢₙₚᵤₜ+ A_{N}^{∗}B_{N}" (FIG. 1).

For an NxN kernel separable to N×1 and 1×N vectors, each N rows would be written out from the array to storage and the Cinput value for row N+1 would be set to zero. In one embodiment, an end user (e.g., utilizing a processor) provides the N×1 and 1×N vectors as input. In addition, at least one embodiment provides a method of shifting input data values across columns of matrix processing array 200 and storing kernel values statically in the array to minimize data loads into the array elements. In an embodiment, the kernel values can be loaded into the array once and buffered (e.g., in a small, dedicated buffer such as a Static Random Access Memory (SRAM)) for subsequent uses.

As shown in FIG. 2, a matrix processing array unit can be described as a 2D matrix of FMA units with each column element coupled vertically to its neighboring downstream FMA element with data accumulating and stored out to storage after the last (bottom) FMA element operation. Further, as shown in FIG. 2, data is loaded into each FMA element of the array in each clock cycle. Further, while a state-of-the art architecture may support matrix-matrix multiplication operations, it is important to note that it does not support any horizontal or diagonal network connections between FMAs, limiting the flow of the outputs to column-only.

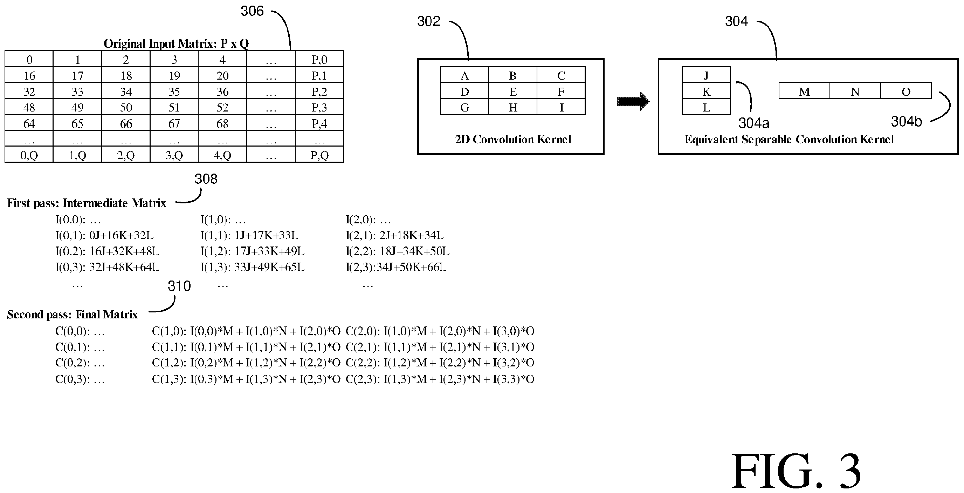

FIG. 3 illustrates sample separable convolution operations, according to an embodiment. In one embodiment, to support image processing filters, the input matrix is shifted horizontally by one element, effectively creating a new input image for each iteration. As described earlier, a separable convolution approach breaks apart the horizontal and vertical components, allowing some embodiments to reduce the number of loads and arithmetic operations by approximately 50%.

As shown in FIG. 3, the separable convolution operation decomposes the NxN kernel 302 into two one-dimensional vectors 304 (vectors 304a and 304b) of order 1×N and N×1, respectively, that when multiplied together, result in the NxN two-dimensional kernel. The separable convolution operation multiplies the first vector 304a with the input image 306 in the first pass, then multiples the intermediate output matrix 308 with the second vector 304b in the second pass to provide the final output matrix 310. Note that the boundary or halo rows and columns are not specifically addressed in the figure, as one or more options such as zeroing, copying absolute or averaged neighbor values, etc. may be implemented in the design.

As mentioned earlier, mapping an image processing filter onto matrix-matrix processing arrays shifts the input image by one element on each cycle and subsequently reloads the input channels on each cycle. As can be seen in FIG. 3, this shift of the input kernel still occurs but only in one dimension due to the matrix-vector separation of the original convolution. At least one embodiment adds a single cross-channel connection between each pair of diagonal FMAs that support the transmission or flow of input data between FMAs as depicted in FIG. 2. This operation could also be accomplished through the loading of a shifted row of the input image. This would require multiple loads for each row of the input image while some embodiments rely on just one load per row, saving significant power.

As shown in Fig. 2, output channels are added for each row of the matrix. However, at least one implementation would only require an output channel for each N rows of the matrix based on an NxN convolution kernel (e.g., a 3x3 convolution kernel would require an output channel for every third row). Recognizing that the X and Y dimensions of a kernel are typically odd (in part because X and Y dimensions are considered around a central point), this can be extended to implementing an output channel on every odd row of the matrix or implementing for every row of the matrix at additional area cost.

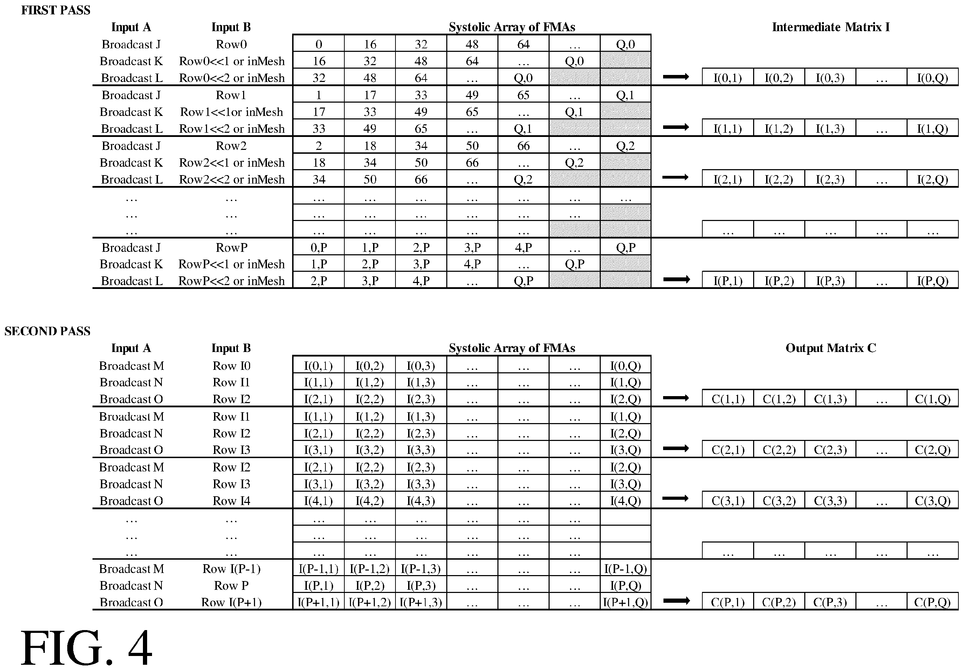

FIG. 4 illustrates implementation and operation of a sample 3x3 separable convolution filter on an image processing filter array, according to an embodiment. Moreover, the operation of a new image processing filter array applied to the input matrix and 3x3 separable convolution kernel in FIG. 3 is demonstrated in FIG. 4.

In this example, the 3x3 kernel is separated into a 3×1 vector and a 1x3 vector. The 3×1 vector is repeated or stacked in a columnar fashion and broadcast across the rows of the filter array. The first row (Row0) of the input image is loaded into the first row of FMAs. Row 1 of the input image is loaded into row N of the Filter Array, Row 2 into row 2^{∗}N, etc. This can be implemented to occur simultaneously in concert with the kernel vector.

After the first cycle, the output of each FMA is fed to the next downstream FMA in the column and each element of the input matrix is fed in a diagonal fashion to element (column-1, row+1). After N iterations (three in this example), each Nth row is stored as an intermediate array. This intermediate array is then used as the input image for the second pass combined with the 1x3 vector of the separable convolution kernel and operates in a similar way as the first pass described above.

One or more new instructions may be used to configure, load, execute, and/or store the separable filter(s) on a matrix processing array. In at least some embodiments, one or more of the instructions discussed herein may follow the EVEX format (such as discussed with reference to FIGs. 5A-5D). Functionality of the configuration instruction can include (but is not limited to) specification of treatment of the halo rows and columns (e.g., zeroing, average, min/max, etc.), kernel size and input image dimensions. The execution instruction would include the kernel and input image sources, the output matrix and the type of filtering.

In some embodiments, the new instructions include:
(1) LDARRAYCFG(m512, imm8): (i) m512 describes the constituent sub-matrices comprising the input image in terms of rows and columns as well as the output sub-matrices needed to store the filter results; and (ii) 8-bit immediate specifies filter attributes including size and stride;
(2) MATRIXLOAD(in_array#, ^{∗}ptr): loads a sub-matrix to a specified systolic array;
(3) FILTERLOAD(filter#, ^{∗}ptr): loads filter(s) to SRAM (Static Random Access Memory) or other memory on the array located at ^{∗}ptr;
(4) ARRAYFILTER(in_array#, filter#, out_array#): executes separable convolution on in_array# using filter#. Note that intermediate array data could also be specified in this instruction (e.g., would be specified in LDARRAYCFG, but for one example only the final array is specified after both passes have been executed); and/or
(5) MATRIXSTORE(out array#, ^{∗}ptr): stores the final result sub-matrix to a location specified by ^{∗}ptr.

In one or more embodiments, the operands for the instructions may be register values, values in a stack, other memory values, input/output ports (which may also be memory mapped), etc.

While the examples described herein may focus on image processing filters mapped to an array of FMA units, it can be envisioned that additional capabilities could be added into each FMA to support additional filter algorithms, e.g., with the tradeoff of associated area and/or power consumption cost. This could include other basic mathematical functions, star routing to (e.g., all) diagonal neighbors, loopback functionality, etc. in various embodiments.

Additionally, some embodiments may be applied in computing systems that include one or more processors (e.g., where the one or more processors may include one or more processor cores), such as those discussed with reference to FIGs. 1 et seq., including for example a desktop computer, a work station, a computer server, a server blade, or a mobile computing device. The mobile computing device may include a smartphone, tablet, UMPC (Ultra-Mobile Personal Computer), laptop computer, Ultrabook^{™} computing device, wearable devices (such as a smart watch, smart ring, smart bracelet, or smart glasses), etc.

### Instruction Sets

An instruction set may include one or more instruction formats. A given instruction format may define various fields (e.g., number of bits, location of bits) to specify, among other things, the operation to be performed (e.g., opcode) and the operand(s) on which that operation is to be performed and/or other data field(s) (e.g., mask). Some instruction formats are further broken down though the definition of instruction templates (or subformats). For example, the instruction templates of a given instruction format may be defined to have different subsets of the instruction format's fields (the included fields are typically in the same order, but at least some have different bit positions because there are less fields included) and/or defined to have a given field interpreted differently. Thus, each instruction of an ISA is expressed using a given instruction format (and, if defined, in a given one of the instruction templates of that instruction format) and includes fields for specifying the operation and the operands. For example, an exemplary ADD instruction has a specific opcode and an instruction format that includes an opcode field to specify that opcode and operand fields to select operands (source 1/destination and source2); and an occurrence of this ADD instruction in an instruction stream will have specific contents in the operand fields that select specific operands. A set of SIMD extensions referred to as the Advanced Vector Extensions (AVX) (AVX1 and AVX2) and using the Vector Extensions (VEX) coding scheme has been released and/or published (e.g., see Intel^{®} 64 and IA-32 Architectures Software Developer's Manual, September 2014; and see Intel^{®} Advanced Vector Extensions Programming Reference, October 2014).

### Exemplary Instruction Formats

Embodiments of the instruction(s) described herein may be embodied in different formats. Additionally, exemplary systems, architectures, and pipelines are detailed below. Embodiments of the instruction(s) may be executed on such systems, architectures, and pipelines, but are not limited to those detailed.

While embodiments will be described in which the vector friendly instruction format supports the following: a 64 byte vector operand length (or size) with 32 bit (4 byte) or 64 bit (8 byte) data element widths (or sizes) (and thus, a 64 byte vector consists of either 16 doubleword-size elements or alternatively, 8 quadword-size elements); a 64 byte vector operand length (or size) with 16 bit (2 byte) or 8 bit (1 byte) data element widths (or sizes); a 32 byte vector operand length (or size) with 32 bit (4 byte), 64 bit (8 byte), 16 bit (2 byte), or 8 bit (1 byte) data element widths (or sizes); and a 16 byte vector operand length (or size) with 32 bit (4 byte), 64 bit (8 byte), 16 bit (2 byte), or 8 bit (1 byte) data element widths (or sizes); alternative embodiments may support more, less and/or different vector operand sizes (e.g., 256 byte vector operands) with more, less, or different data element widths (e.g., 128 bit (16 byte) data element widths).

FIG. 5A is a block diagram illustrating an exemplary instruction format according to embodiments. FIG. 5A shows an instruction format 500 that is specific in the sense that it specifies the location, size, interpretation, and order of the fields, as well as values for some of those fields. The instruction format 500 may be used to extend the x86 instruction set, and thus some of the fields are similar or the same as those used in the existing x86 instruction set and extension thereof (e.g., AVX). This format remains consistent with the prefix encoding field, real opcode byte field, MOD R/M field, SIB field, displacement field, and immediate fields of the existing x86 instruction set with extensions.

EVEX Prefix (Bytes 0-3) 502 - is encoded in a four-byte form.

Format Field 582 (EVEX Byte 0, bits [7:0]) - the first byte (EVEX Byte 0) is the format field 582 and it contains 0x62 (the unique value used for distinguishing the vector friendly instruction format in one embodiment).

The second-fourth bytes (EVEX Bytes 1-3) include a number of bit fields providing specific capability.

REX field 505 (EVEX Byte 1, bits [7-5]) - consists of a EVEX.R bit field (EVEX Byte 1, bit [7] - R), EVEX.X bit field (EVEX byte 1, bit [6] - X), and 557BEX byte 1, bit[5] - B). The EVEX.R, EVEX.X, and EVEX.B bit fields provide the same functionality as the corresponding VEX bit fields, and are encoded using 1s complement form, i.e., ZMM0 is encoded as 1111B, ZMM15 is encoded as 0000B. Other fields of the instructions encode the lower three bits of the register indexes as is known in the art (rrr, xxx, and bbb), so that Rrrr, Xxxx, and Bbbb may be formed by adding EVEX.R, EVEX.X, and EVEX.B.

REX' field QAclO - this is the EVEX.R' bit field (EVEX Byte 1, bit [4] - R') that is used to encode either the upper 16 or lower 16 of the extended 32 register set. In one embodiment, this bit, along with others as indicated below, is stored in bit inverted format to distinguish (in the well-known x86 32-bit mode) from the BOUND instruction, whose real opcode byte is 62, but does not accept in the MOD R/M field (described below) the value of 11 in the MOD field; alternative embodiments do not store this and the other indicated bits below in the inverted format. A value of 1 is used to encode the lower 16 registers. In other words, R'Rrrr is formed by combining EVEX.R', EVEX.R, and the other RRR from other fields.

Opcode map field 515 (EVEX byte 1, bits [3:0] - mmmm) - its content encodes an implied leading opcode byte (0F, OF 38, or OF 3).

Data element width field 564 (EVEX byte 2, bit [7] - W) - is represented by the notation EVEX.W. EVEX.W is used to define the granularity (size) of the datatype (either 32-bit data elements or 64-bit data elements). This field is optional in the sense that it is not needed if only one data element width is supported and/or data element widths are supported using some aspect of the opcodes.

EVEX.vvvv 520 (EVEX Byte 2, bits [6:3]-vvvv)- the role of EVEX.vvvv may include the following: 1) EVEX.vvvv encodes the first source register operand, specified in inverted (1s complement) form and is valid for instructions with 2 or more source operands; 2) EVEX.vvvv encodes the destination register operand, specified in Is complement form for certain vector shifts; or 3) EVEX.vvvv does not encode any operand, the field is reserved and should contain 1111b. Thus, EVEX.vvvv field 520 encodes the 4 low-order bits of the first source register specifier stored in inverted (1s complement) form. Depending on the instruction, an extra different EVEX bit field is used to extend the specifier size to 32 registers.

EVEX.U 568 Class field (EVEX byte 2, bit [2]-U) - If EVEX.U = 0, it indicates class A (support merging-writemasking) or EVEX.U0; if EVEX.U = 1, it indicates class B (support zeroing and merging-writemasking)or EVEX.U1.

Prefix encoding field 525 (EVEX byte 2, bits [1:0]-pp) - provides additional bits for the base operation field. In addition to providing support for the legacy SSE instructions in the EVEX prefix format, this also has the benefit of compacting the SIMD prefix (rather than requiring a byte to express the SIMD prefix, the EVEX prefix requires only 2 bits). In one embodiment, to support legacy SSE instructions that use a SIMD prefix (66H, F2H, F3H) in both the legacy format and in the EVEX prefix format, these legacy SIMD prefixes are encoded into the SIMD prefix encoding field; and at runtime are expanded into the legacy SIMD prefix prior to being provided to the decoder's PLA (so the PLA can execute both the legacy and EVEX format of these legacy instructions without modification). Although newer instructions could use the EVEX prefix encoding field's content directly as an opcode extension, certain embodiments expand in a similar fashion for consistency but allow for different meanings to be specified by these legacy SIMD prefixes. An alternative embodiment may redesign the PLA to support the 2 bit SIMD prefix encodings, and thus not require the expansion.

Alpha field 553 (EVEX byte 3, bit [7] - EH; also known as EVEX.EH, EVEX.rs, EVEX.RL, EVEX.writemask control, and EVEX.N; also illustrated with α) - its content distinguishes which one of the different augmentation operation types are to be performed.

Beta field 555 (EVEX byte 3, bits [6:4]-SSS, also known as EVEX.s2-0, EVEX.r2-0, EVEX.rr1, FVFX.LL0, EVEX.LLB; also illustrated with βββ) - distinguishes which of the operations of a specified type are to be performed.

REX' field 510 - this is the remainder of the REX' field and is the EVEX.V' bit field (EVEX Byte 3, bit [3] - V') that may be used to encode either the upper 16 or lower 16 of the extended 32 register set. This bit is stored in bit inverted format. A value of 1 is used to encode the lower 16 registers. In other words, V'VVVV is formed by combining EVEX.V', EVEX.vvvv.

Writemask field 571 (EVEX byte 3, bits [2:0]-kkk) - its content specifies the index of a register in the writemask registers. In one embodiment, the specific value EVEX.kkk=000 has a special behavior implying no writemask is used for the particular instruction (this may be implemented in a variety of ways including the use of a writemask hardwired to all ones or hardware that bypasses the masking hardware). When merging, vector masks allow any set of elements in the destination to be protected from updates during the execution of any operation (specified by the base operation and the augmentation operation); in other one embodiment, preserving the old value of each element of the destination where the corresponding mask bit has a 0. In contrast, when zeroing vector masks allow any set of elements in the destination to be zeroed during the execution of any operation (specified by the base operation and the augmentation operation); in one embodiment, an element of the destination is set to 0 when the corresponding mask bit has a 0 value. A subset of this functionality is the ability to control the vector length of the operation being performed (that is, the span of elements being modified, from the first to the last one); however, it is not necessary that the elements that are modified be consecutive. Thus, the writemask field 571 allows for partial vector operations, including loads, stores, arithmetic, logical, etc. While embodiments are described in which the writemask field's 571 content selects one of a number of writemask registers that contains the writemask to be used (and thus the writemask field's 571 content indirectly identifies that masking to be performed), alternative embodiments instead or additional allow the mask write field's 571 content to directly specify the masking to be performed.

Real Opcode Field 530 (Byte 4) is also known as the opcode byte. Part of the opcode is specified in this field.

MOD R/M Field 540 (Byte 5) includes MOD field 542, register index field 544, and R/M field 546. The MOD field's 542 content distinguishes between memory access and non-memory access operations. The role of register index field 544 can be summarized to two situations: encoding either the destination register operand or a source register operand, or be treated as an opcode extension and not used to encode any instruction operand. The content of register index field 544, directly or through address generation, specifies the locations of the source and destination operands, be they in registers or in memory. These include a sufficient number of bits to select N registers from a PxQ (e.g., 32x512, 7x128, 32×1024, 64x1024) register file. While in one embodiment N may be up to three sources and one destination register, alternative embodiments may support more or less sources and destination registers (e.g., may support up to two sources where one of these sources also acts as the destination, may support up to three sources where one of these sources also acts as the destination, may support up to two sources and one destination).

The role of R/M field 546 may include the following: encoding the instruction operand that references a memory address, or encoding either the destination register operand or a source register operand.

Scale, Index, Base (SIB) Byte (Byte 6) - The scale field's 550 content allows for the scaling of the index field's content for memory address generation (e.g., for address generation that uses 2scale ^{∗} index + base). SIB.xxx 554 and SIB.bbb 556 - the contents of these fields have been previously referred to with regard to the register indexes Xxxx and Bbbb.

Displacement field 563A (Bytes 7-10) - when MOD field 542 contains 10, bytes 7-10 are the displacement field 563A, and it works the same as the legacy 32-bit displacement (disp32) and works at byte granularity. This may be used as part of memory address generation (e.g., for address generation that uses 2scale ^{∗} index + base + displacement).

Displacement factor field 563B (Byte 7) - when MOD field 542 contains 01, byte 7 is the displacement factor field 563B. The location of this field is that same as that of the legacy x86 instruction set 8-bit displacement (disp8), which works at byte granularity. Since disp8 is sign extended, it can only address between -128 and 127 bytes offsets; in terms of 64 byte cache lines, disp8 uses 8 bits that can be set to only four really useful values -128, -64, 0, and 64; since a greater range is often needed, disp32 is used; however, disp32 requires 4 bytes. In contrast to disp8 and disp32, the displacement factor field 563B is a reinterpretation of disp8; when using displacement factor field 563B, the actual displacement is determined by the content of the displacement factor field multiplied by the size of the memory operand access (N). This type of displacement is referred to as disp8^{∗}N. This reduces the average instruction length (a single byte of used for the displacement but with a much greater range). Such compressed displacement is based on the assumption that the effective displacement is multiple of the granularity of the memory access, and hence, the redundant low-order bits of the address offset do not need to be encoded. In other words, the displacement factor field 563B substitutes the legacy x86 instruction set 8-bit displacement. Thus, the displacement factor field 563B is encoded the same way as an x86 instruction set 8-bit displacement (so no changes in the ModRM/SIB encoding rules) with the only exception that disp8 is overloaded to disp8^{∗}N. In other words, there are no changes in the encoding rules or encoding lengths but only in the interpretation of the displacement value by hardware (which needs to scale the displacement by the size of the memory operand to obtain a byte-wise address offset).

Immediate field 572 allows for the specification of an immediate. This field is optional in the sense that is it not present in an implementation of the generic vector friendly format that does not support immediate and it is not present in instructions that do not use an immediate.

### Full Opcode Field

FIG. 5B is a block diagram illustrating the fields of the instruction format 500 that make up the full opcode field 574 according to one embodiment. Specifically, the full opcode field 574 includes the format field 582, the base operation field 543, and the data element width (W) field 563. The base operation field 543 includes the prefix encoding field 525, the opcode map field 515, and the real opcode field 530.

### Register Index Field

FIG. 5C is a block diagram illustrating the fields of the format 500 that make up the register index field 545 according to one embodiment. Specifically, the register index field 545 includes the REX field 505, the REX' field 510, the MODR/M.reg field 544, the MODR/M.r/m field 546, the VVVV field 520, xxx field 554, and the bbb field 556.

### Augmentation Operation Field

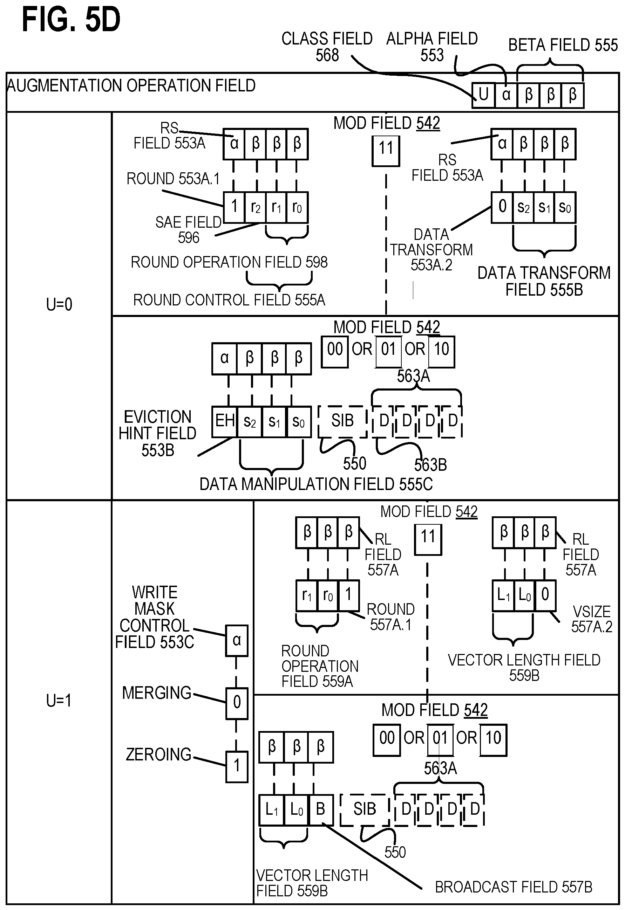

FIG. 5D is a block diagram illustrating the fields of the instruction format 500 that make up an augmentation operation field according to one embodiment. When the class (U) field 568 contains 0, it signifies EVEX.U0 (class A 568A); when it contains 1, it signifies EVEX.U1 (class B 568B). When U=0 and the MOD field 542 contains 11 (signifying a no memory access operation), the alpha field 553 (EVEX byte 3, bit [7] - EH) is interpreted as the rs field 553A. When the rs field 553A contains a 1 (round 553A.1), the beta field 555 (EVEX byte 3, bits [6:4]- SSS) is interpreted as the round control field 555A. The round control field 555A includes a one bit SAE field 596 and a two bit round operation field 598. When the rs field 553A contains a 0 (data transform 553A.2), the beta field 555 (EVEX byte 3, bits [6:4]- SSS) is interpreted as a three bit data transform field 555B. When U=0 and the MOD field 542 contains 00, 01, or 10 (signifying a memory access operation), the alpha field 553 (EVEX byte 3, bit [7] - EH) is interpreted as the eviction hint (EH) field 553B and the beta field 555 (EVEX byte 3, bits [6:4]- SSS) is interpreted as a three bit data manipulation field 555C.

When U=1, the alpha field 553 (EVEX byte 3, bit [7] - EH) is interpreted as the writemask control (Z) field 553C. When U=1 and the MOD field 542 contains 11 (signifying a no memory access operation), part of the beta field 555 (EVEX byte 3, bit [4]- S0) is interpreted as the RL field 557A; when it contains a 1 (round 557A.1) the rest of the beta field 555 (EVEX byte 3, bit [6-5]- S2-1) is interpreted as the round operation field 559A, while when the RL field 557A contains a 0 (VSIZE 557.A2) the rest of the beta field 555 (EVEX byte 3, bit [6-5]- S2-1) is interpreted as the vector length field 559B (EVEX byte 3, bit [6-5]- L1-0). When U=1 and the MOD field 542 contains 00, 01, or 10 (signifying a memory access operation), the beta field 555 (EVEX byte 3, bits [6:4]- SSS) is interpreted as the vector length field 559B (EVEX byte 3, bit [6-5]- L1-0) and the broadcast field 557B (EVEX byte 3, bit [4]- B).

### Exemplary Register Architecture

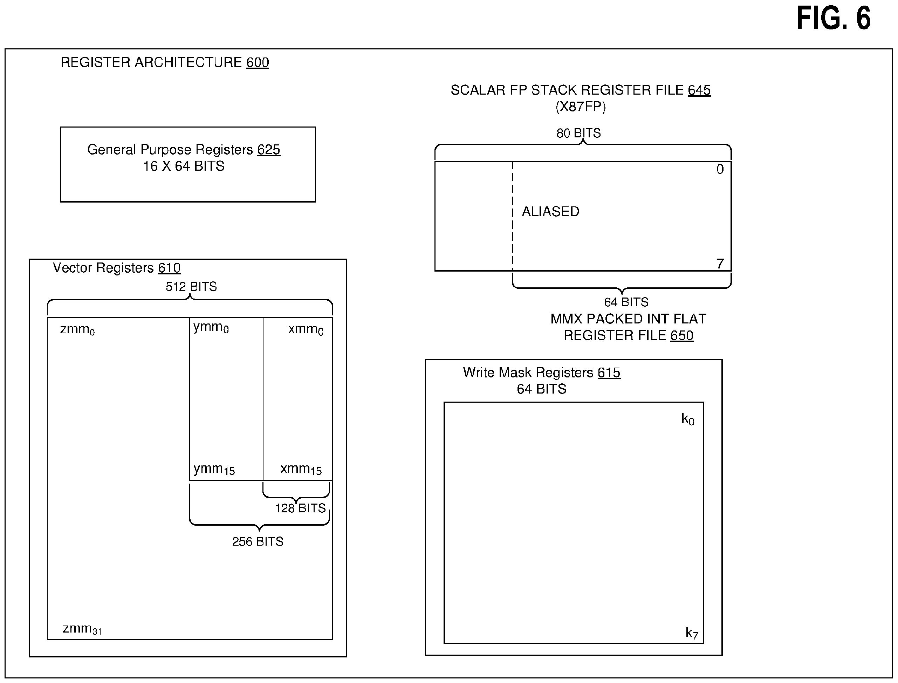

FIG. 6 is a block diagram of a register architecture 600 according to one embodiment. In the embodiment illustrated, there are 32 vector registers 610 that are 512 bits wide; these registers are referenced as ZMM0 through ZMM31. The lower order 256 bits of the lower 16 ZMM registers are overlaid on registers YMMO-16. The lower order 128 bits of the lower 16 ZMM registers (the lower order 128 bits of the YMM registers) are overlaid on registers XMMO-15. In other words, the vector length field 459B selects between a maximum length and one or more other shorter lengths, where each such shorter length is half the length of the preceding length; and instructions templates without the vector length field 459B operate on the maximum vector length. Further, in one embodiment, the class B instruction templates of the instruction format 400 operate on packed or scalar single/double-precision floating point data and packed or scalar integer data. Scalar operations are operations performed on the lowest order data element position in a ZMM/YMM/XMM register; the higher order data element positions are either left the same as they were prior to the instruction or zeroed depending on the embodiment.

Writemask registers 615 - in the embodiment illustrated, there are 8 writemask registers (k0 through k7), each 64 bits in size. In an alternate embodiment, the writemask registers 615 are 16 bits in size. In some embodiments, the vector mask register k0 cannot be used as a writemask; when the encoding that would normally indicate k0 is used for a writemask, it selects a hardwired writemask of 0xFFFF, effectively disabling writemasking for that instruction.

General-purpose registers 625 - in the embodiment illustrated, there are sixteen 64-bit general-purpose registers that are used along with the existing x86 addressing modes to address memory operands. These registers are referenced by the names RAX, RBX, RCX, RDX, RBP, RSI, RDI, RSP, and R8 through R15.

Scalar floating point stack register file (x87 stack) 645, on which is aliased the MMX packed integer flat register file 650 - in the embodiment illustrated, the x87 stack is an eight-element stack used to perform scalar floating-point operations on 32/64/80-bit floating point data using the x87 instruction set extension; while the MMX registers are used to perform operations on 64-bit packed integer data, as well as to hold operands for some operations performed between the MMX and XMM registers.

Alternative embodiments may use wider or narrower registers. Additionally, alternative embodiments may use more, less, or different register files and registers.

### Exemplary Core Architectures, Processors, and Computer Architectures

Processor cores may be implemented in different ways, for different purposes, and in different processors. For instance, implementations of such cores may include: 1) a general purpose in-order core intended for general-purpose computing; 2) a high performance general purpose out-of-order core intended for general-purpose computing; 3) a special purpose core intended primarily for graphics and/or scientific (throughput) computing. Implementations of different processors may include: 1) a CPU (Central Processing Unit) including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput). Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip that may include on the same die the described CPU (sometimes referred to as the application core(s) or application processor(s)), the above described coprocessor, and additional functionality. Exemplary core architectures are described next, followed by descriptions of exemplary processors and computer architectures.

### Exemplary Core Architectures

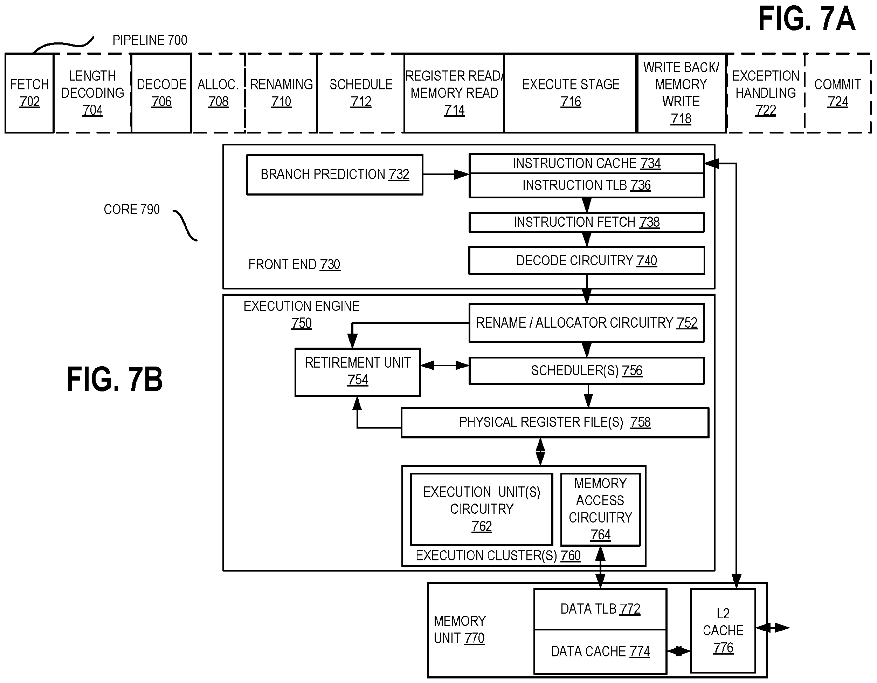

FIG. 7A is a block diagram illustrating both an exemplary in-order pipeline and an exemplary register renaming, out-of-order issue/execution pipeline according to embodiments. FIG. 7B is a block diagram illustrating both an exemplary embodiment of an in-order architecture core and an exemplary register renaming, out-of-order issue/execution architecture core to be included in a processor according to embodiments. The solid lined boxes in FIGS. 7A-B illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In FIG. 7A, a processor pipeline 700 includes a fetch stage 702, a length decode stage 704, a decode stage 706, an allocation stage 708, a renaming stage 710, a scheduling (also known as a dispatch or issue) stage 712, a register read/memory read stage 714, an execute stage 716, a write back/memory write stage 718, an exception handling stage 722, and a commit stage 724.

FIG. 7B shows processor core 790 including a front end unit 730 coupled to an execution engine unit 750, and both are coupled to a memory unit 770. The core 790 may be a reduced instruction set computing (RISC) core, a complex instruction set computing (CISC) core, a very long instruction word (VLIW) core, or a hybrid or alternative core type. As yet another option, the core 790 may be a special-purpose core, such as, for example, a network or communication core, compression engine, coprocessor core, general purpose computing graphics processing unit (GPGPU) core, graphics core, or the like.

The front end unit 730 includes a branch prediction unit 732 coupled to an instruction cache unit 734, which is coupled to an instruction translation lookaside buffer (TLB) 736, which is coupled to an instruction fetch unit 738, which is coupled to a decode unit 740. The decode unit 740 (or decoder) may decode instructions, and generate as an output one or more micro-operations, micro-code entry points, microinstructions, other instructions, or other control signals, which are decoded from, or which otherwise reflect, or are derived from, the original instructions. The decode unit 740 may be implemented using various different mechanisms. Examples of suitable mechanisms include, but are not limited to, look-up tables, hardware implementations, programmable logic arrays (PLAs), microcode read only memories (ROMs), etc. In one embodiment, the core 790 includes a microcode ROM or other medium that stores microcode for certain macroinstructions (e.g., in decode unit 740 or otherwise within the front end unit 730). The decode unit 740 is coupled to a rename/allocator unit 752 in the execution engine unit 750.

The execution engine unit 750 includes the rename/allocator unit 752 coupled to a retirement unit 754 and a set of one or more scheduler unit(s) 756. The scheduler unit(s) 756 represents any number of different schedulers, including reservations stations, central instruction window, etc. The scheduler unit(s) 756 is coupled to the physical register file(s) unit(s) 758. Each of the physical register file(s) units 758 represents one or more physical register files, different ones of which store one or more different data types, such as scalar integer, scalar floating point, packed integer, packed floating point, vector integer, vector floating point,, status (e.g., an instruction pointer that is the address of the next instruction to be executed), etc. In one embodiment, the physical register file(s) unit 758 comprises a vector registers unit, a writemask registers unit, and a scalar registers unit. These register units may provide architectural vector registers, vector mask registers, and general purpose registers. The physical register file(s) unit(s) 758 is overlapped by the retirement unit 754 to illustrate various ways in which register renaming and out-of-order execution may be implemented (e.g., using a reorder buffer(s) and a retirement register file(s); using a future file(s), a history buffer(s), and a retirement register file(s); using a register maps and a pool of registers; etc.). The retirement unit 754 and the physical register file(s) unit(s) 758 are coupled to the execution cluster(s) 760. The execution cluster(s) 760 includes a set of one or more execution units 762 and a set of one or more memory access units 764. The execution units 762 may perform various operations (e.g., shifts, addition, subtraction, multiplication) and on various types of data (e.g., scalar floating point, packed integer, packed floating point, vector integer, vector floating point). While some embodiments may include a number of execution units dedicated to specific functions or sets of functions, other embodiments may include only one execution unit or multiple execution units that all perform all functions. The scheduler unit(s) 756, physical register file(s) unit(s) 758, and execution cluster(s) 760 are shown as being possibly plural because certain embodiments create separate pipelines for certain types of data/operations (e.g., a scalar integer pipeline, a scalar floating point/packed integer/packed floating point/vector integer/vector floating point pipeline, and/or a memory access pipeline that each have their own scheduler unit, physical register file(s) unit, and/or execution cluster - and in the case of a separate memory access pipeline, certain embodiments are implemented in which only the execution cluster of this pipeline has the memory access unit(s) 764). It should also be understood that where separate pipelines are used, one or more of these pipelines may be out-of-order issue/execution and the rest in-order.

The set of memory access units 764 is coupled to the memory unit 770, which includes a data TLB unit 772 coupled to a data cache unit 774 coupled to a level 2 (L2) cache unit 776. In one exemplary embodiment, the memory access units 764 may include a load unit, a store address unit, and a store data unit, each of which is coupled to the data TLB unit 772 in the memory unit 770. The instruction cache unit 734 is further coupled to a level 2 (L2) cache unit 776 in the memory unit 770. The L2 cache unit 776 is coupled to one or more other levels of cache and eventually to a main memory.

By way of example, the exemplary register renaming, out-of-order issue/execution core architecture may implement the pipeline 700 as follows: 1) the instruction fetch 738 performs the fetch and length decoding stages 702 and 704; 2) the decode unit 740 performs the decode stage 706; 3) the rename/allocator unit 752 performs the allocation stage 708 and renaming stage 710; 4) the scheduler unit(s) 756 performs the schedule stage 712; 5) the physical register file(s) unit(s) 758 and the memory unit 770 perform the register read/memory read stage 714; the execution cluster 760 perform the execute stage 716; 6) the memory unit 770 and the physical register file(s) unit(s) 758 perform the write back/memory write stage 718; 7) various units may be involved in the exception handling stage 722; and 8) the retirement unit 754 and the physical register file(s) unit(s) 758 perform the commit stage 724.

The core 790 may support one or more instructions sets (e.g., the x86 instruction set (with some extensions that have been added with newer versions); the MIPS instruction set of MIPS Technologies of Sunnyvale, CA; the ARM instruction set (with optional additional extensions such as NEON) of ARM Holdings of Sunnyvale, CA), including the instruction(s) described herein. In one embodiment, the core 790 includes logic to support a packed data instruction set extension (e.g., AVX1, AVX2), thereby allowing the operations used by many multimedia applications to be performed using packed data.

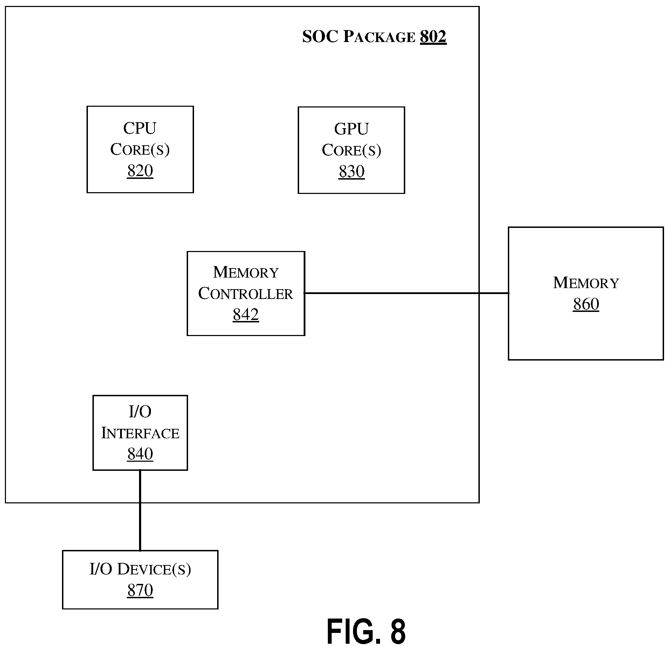

FIG. 8 illustrates a block diagram of an SOC package in accordance with an embodiment. As illustrated in FIG. 8, SOC 802 includes one or more Central Processing Unit (CPU) cores 820, one or more Graphics Processor Unit (GPU) cores 830, an Input/Output (I/O) interface 840, and a memory controller 842. Various components of the SOC package 802 may be coupled to an interconnect or bus such as discussed herein with reference to the other figures. Also, the SOC package 802 may include more or less components, such as those discussed herein with reference to the other figures. Further, each component of the SOC package 802 may include one or more other components, e.g., as discussed with reference to the other figures herein. In one embodiment, SOC package 802 (and its components) is provided on one or more Integrated Circuit (IC) die, e.g., which are packaged into a single semiconductor device.

As illustrated in FIG. 8, SOC package 802 is coupled to a memory 860 via the memory controller 842. In an embodiment, the memory 860 (or a portion of it) can be integrated on the SOC package 802.

The I/O interface 840 may be coupled to one or more I/O devices 870, e.g., via an interconnect and/or bus such as discussed herein with reference to other figures. *I*/*O* device(s) 870 may include one or more of a keyboard, a mouse, a touchpad, a display, an image/video capture device (such as a camera or camcorder/video recorder), a touch screen, a speaker, or the like.

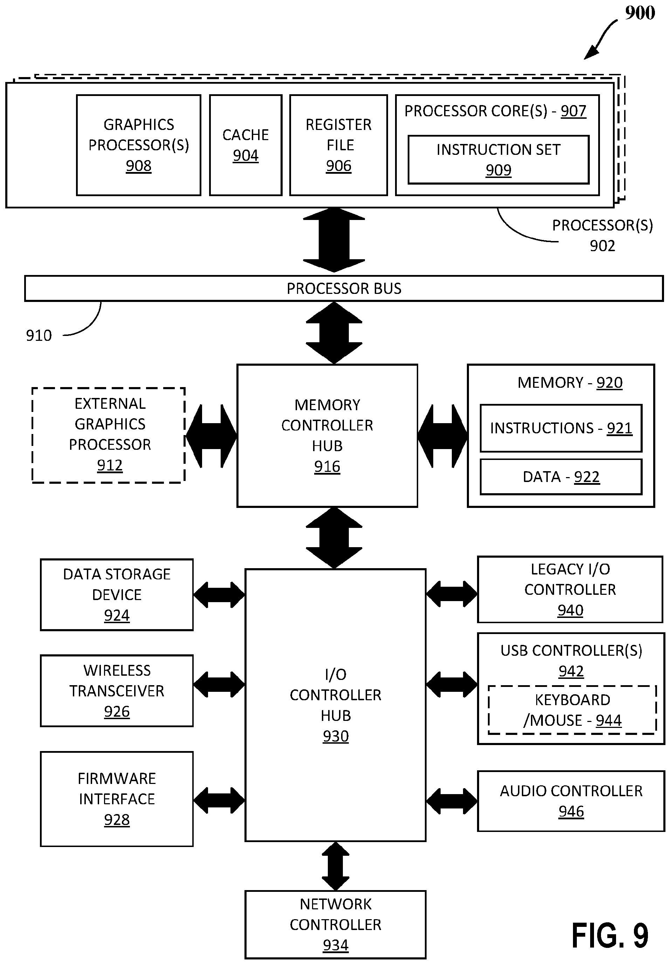

FIG. 9 is a block diagram of a processing system 900, according to an embodiment. In various embodiments the system 900 includes one or more processors 902 and one or more graphics processors 908, and may be a single processor desktop system, a multiprocessor workstation system, or a server system having a large number of processors 902 or processor cores 907. In on embodiment, the system 900 is a processing platform incorporated within a system-on-a-chip (SoC or SOC) integrated circuit for use in mobile, handheld, or embedded devices.

An embodiment of system 900 can include, or be incorporated within a server-based gaming platform, a game console, including a game and media console, a mobile gaming console, a handheld game console, or an online game console. In some embodiments system 900 is a mobile phone, smart phone, tablet computing device or mobile Internet device. Data processing system 900 can also include, couple with, or be integrated within a wearable device, such as a smart watch wearable device, smart eyewear device, augmented reality device, or virtual reality device. In some embodiments, data processing system 900 is a television or set top box device having one or more processors 902 and a graphical interface generated by one or more graphics processors 908.

In some embodiments, the one or more processors 902 each include one or more processor cores 907 to process instructions which, when executed, perform operations for system and user software. In some embodiments, each of the one or more processor cores 907 is configured to process a specific instruction set 909. In some embodiments, instruction set 909 may facilitate Complex Instruction Set Computing (CISC), Reduced Instruction Set Computing (RISC), or computing via a Very Long Instruction Word (VLIW). Multiple processor cores 907 may each process a different instruction set 909, which may include instructions to facilitate the emulation of other instruction sets. Processor core 907 may also include other processing devices, such a Digital Signal Processor (DSP).

In some embodiments, the processor 902 includes cache memory 904. Depending on the architecture, the processor 902 can have a single internal cache or multiple levels of internal cache. In some embodiments, the cache memory is shared among various components of the processor 902. In some embodiments, the processor 902 also uses an external cache (e.g., a Level-3 (L3) cache or Last Level Cache (LLC)) (not shown), which may be shared among processor cores 907 using known cache coherency techniques. A register file 906 is additionally included in processor 902 which may include different types of registers for storing different types of data (e.g., integer registers, floating point registers, status registers, and an instruction pointer register). Some registers may be general-purpose registers, while other registers may be specific to the design of the processor 902.

In some embodiments, processor 902 is coupled to a processor bus 910 to transmit communication signals such as address, data, or control signals between processor 902 and other components in system 900. In one embodiment the system 900 uses an exemplary 'hub' system architecture, including a memory controller hub 916 and an Input Output (I/O) controller hub 930. A memory controller hub 916 facilitates communication between a memory device and other components of system 900, while an I/O Controller Hub (ICH) 930 provides connections to I/O devices via a local I/O bus. In one embodiment, the logic of the memory controller hub 916 is integrated within the processor.

Memory device 920 can be a dynamic random access memory (DRAM) device, a static random access memory (SRAM) device, flash memory device, phase-change memory device, or some other memory device having suitable performance to serve as process memory. In one embodiment the memory device 920 can operate as system memory for the system 900, to store data 922 and instructions 921 for use when the one or more processors 902 executes an application or process. Memory controller hub 916 also couples with an optional external graphics processor 912, which may communicate with the one or more graphics processors 908 in processors 902 to perform graphics and media operations.

In some embodiments, ICH 930 enables peripherals to connect to memory device 920 and processor 902 via a high-speed I/O bus. The I/O peripherals include, but are not limited to, an audio controller 946, a firmware interface 928, a wireless transceiver 926 (e.g., Wi-Fi, Bluetooth), a data storage device 924 (e.g., hard disk drive, flash memory, etc.), and a legacy I/O controller 940 for coupling legacy (e.g., Personal System 2 (PS/2)) devices to the system. One or more Universal Serial Bus (USB) controllers 942 connect input devices, such as keyboard and mouse 944 combinations. A network controller 934 may also couple to ICH 930. In some embodiments, a high-performance network controller (not shown) couples to processor bus 910. It will be appreciated that the system 900 shown is exemplary and not limiting, as other types of data processing systems that are differently configured may also be used. For example, the I/O controller hub 930 may be integrated within the one or more processor 902, or the memory controller hub 916 and I/O controller hub 930 may be integrated into a discreet external graphics processor, such as the external graphics processor 912.

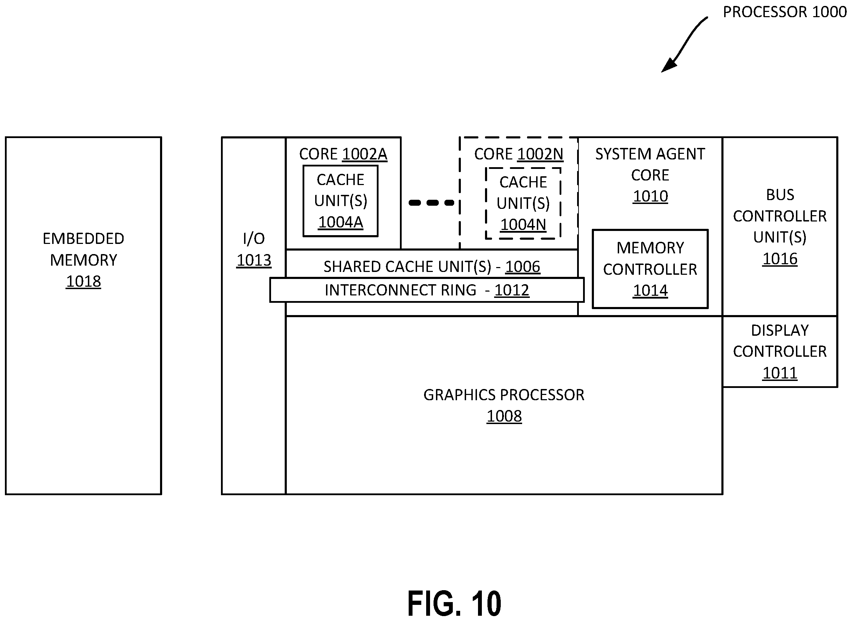

FIG. 10 is a block diagram of an embodiment of a processor 1000 having one or more processor cores 1002A to 1002N, an integrated memory controller 1014, and an integrated graphics processor 1008. Those elements of FIG. 10 having the same reference numbers (or names) as the elements of any other figure herein can operate or function in any manner similar to that described elsewhere herein, but are not limited to such. Processor 1000 can include additional cores up to and including additional core 1002N represented by the dashed lined boxes. Each of processor cores 1002A to 1002N includes one or more internal cache units 1004A to 1004N. In some embodiments each processor core also has access to one or more shared cached units 1006.

The internal cache units 1004A to 1004N and shared cache units 1006 represent a cache memory hierarchy within the processor 1000. The cache memory hierarchy may include at least one level of instruction and data cache within each processor core and one or more levels of shared mid-level cache, such as a Level 2 (L2), Level 3 (L3), Level 4 (L4), or other levels of cache, where the highest level of cache before external memory is classified as the LLC. In some embodiments, cache coherency logic maintains coherency between the various cache units 1006 and 1004A to 1004N.

In some embodiments, processor 1000 may also include a set of one or more bus controller units 1016 and a system agent core 1010. The one or more bus controller units 1016 manage a set of peripheral buses, such as one or more Peripheral Component Interconnect buses (e.g., PCI, PCI Express). System agent core 1010 provides management functionality for the various processor components. In some embodiments, system agent core 1010 includes one or more integrated memory controllers 1014 to manage access to various external memory devices (not shown).

In some embodiments, one or more of the processor cores 1002A to 1002N include support for simultaneous multi-threading. In such embodiment, the system agent core 1010 includes components for coordinating and operating cores 1002A to 1002N during multi-threaded processing. System agent core 1010 may additionally include a power control unit (PCU), which includes logic and components to regulate the power state of processor cores 1002A to 1002N and graphics processor 1008.

In some embodiments, processor 1000 additionally includes graphics processor 1008 to execute graphics processing operations. In some embodiments, the graphics processor 1008 couples with the set of shared cache units 1006, and the system agent core 1010, including the one or more integrated memory controllers 1014. In some embodiments, a display controller 1011 is coupled with the graphics processor 1008 to drive graphics processor output to one or more coupled displays. In some embodiments, display controller 1011 may be a separate module coupled with the graphics processor via at least one interconnect, or may be integrated within the graphics processor 1008 or system agent core 1010.

In some embodiments, a ring based interconnect unit 1012 is used to couple the internal components of the processor 1000. However, an alternative interconnect unit may be used, such as a point-to-point interconnect, a switched interconnect, or other techniques, including techniques well known in the art. In some embodiments, graphics processor 1008 couples with the ring interconnect 1012 via an I/O link 1013.

The exemplary I/O link 1013 represents at least one of multiple varieties of I/O interconnects, including an on package I/O interconnect which facilitates communication between various processor components and a high-performance embedded memory module 1018, such as an eDRAM (or embedded DRAM) module. In some embodiments, each of the processor cores 1002 to 1002N and graphics processor 1008 use embedded memory modules 1018 as a shared Last Level Cache.

In some embodiments, processor cores 1002A to 1002N are homogenous cores executing the same instruction set architecture. In another embodiment, processor cores 1002A to 1002N are heterogeneous in terms of instruction set architecture (ISA), where one or more of processor cores 1002A to 1002N execute a first instruction set, while at least one of the other cores executes a subset of the first instruction set or a different instruction set. In one embodiment processor cores 1002A to 1002N are heterogeneous in terms of microarchitecture, where one or more cores having a relatively higher power consumption couple with one or more power cores having a lower power consumption. Additionally, processor 1000 can be implemented on one or more chips or as an SoC integrated circuit having the illustrated components, in addition to other components.

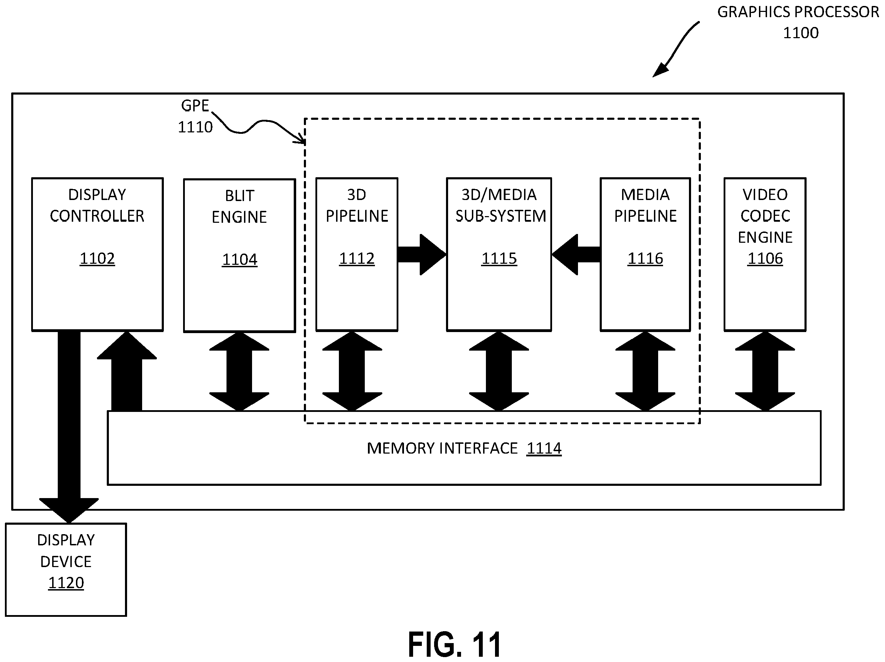

FIG. 11 is a block diagram of a graphics processor 1100, which may be a discrete graphics processing unit, or may be a graphics processor integrated with a plurality of processing cores. In some embodiments, the graphics processor communicates via a memory mapped I/O interface to registers on the graphics processor and with commands placed into the processor memory. In some embodiments, graphics processor 1100 includes a memory interface 1114 to access memory. Memory interface 1114 can be an interface to local memory, one or more internal caches, one or more shared external caches, and/or to system memory.

In some embodiments, graphics processor 1100 also includes a display controller 1102 to drive display output data to a display device 1120. Display controller 1102 includes hardware for one or more overlay planes for the display and composition of multiple layers of video or user interface elements. In some embodiments, graphics processor 1100 includes a video codec engine 1106 to encode, decode, or transcode media to, from, or between one or more media encoding formats, including, but not limited to Moving Picture Experts Group (MPEG) formats such as MPEG-2, Advanced Video Coding (AVC) formats such as H.264/MPEG-4 AVC, as well as the Society of Motion Picture & Television Engineers (SMPTE) 321M/VC-1, and Joint Photographic Experts Group (JPEG) formats such as JPEG, and Motion JPEG (MJPEG) formats.

In some embodiments, graphics processor 1100 includes a block image transfer (BLIT) engine 1104 to perform two-dimensional (2D) rasterizer operations including, for example, bit-boundary block transfers. However, in one embodiment, 3D graphics operations are performed using one or more components of graphics processing engine (GPE) 1110. In some embodiments, graphics processing engine 1110 is a compute engine for performing graphics operations, including three-dimensional (3D) graphics operations and media operations.

In some embodiments, GPE 1110 includes a 3D pipeline 1112 for performing 3D operations, such as rendering three-dimensional images and scenes using processing functions that act upon 3D primitive shapes (e.g., rectangle, triangle, etc.). The 3D pipeline 1112 includes programmable and fixed function elements that perform various tasks within the element and/or spawn execution threads to a 3D/Media sub-system 1115. While 3D pipeline 1112 can be used to perform media operations, an embodiment of GPE 1110 also includes a media pipeline 1116 that is specifically used to perform media operations, such as video post-processing and image enhancement.

In some embodiments, media pipeline 1116 includes fixed function or programmable logic units to perform one or more specialized media operations, such as video decode acceleration, video de-interlacing, and video encode acceleration in place of, or on behalf of video codec engine 1106. In some embodiments, media pipeline 1116 additionally includes a thread spawning unit to spawn threads for execution on 3D/Media sub-system 1115. The spawned threads perform computations for the media operations on one or more graphics execution units included in 3D/Media sub-system 1115.

In some embodiments, 3D/Media subsystem 1115 includes logic for executing threads spawned by 3D pipeline 1112 and media pipeline 1116. In one embodiment, the pipelines send thread execution requests to 3D/Media subsystem 1115, which includes thread dispatch logic for arbitrating and dispatching the various requests to available thread execution resources. The execution resources include an array of graphics execution units to process the 3D and media threads. In some embodiments, 3D/Media subsystem 1115 includes one or more internal caches for thread instructions and data. In some embodiments, the subsystem also includes shared memory, including registers and addressable memory, to share data between threads and to store output data.

In the following description, numerous specific details are set forth to provide a more thorough understanding. However, it will be apparent to one of skill in the art that the embodiments described herein may be practiced without one or more of these specific details. In other instances, well-known features have not been described to avoid obscuring the details of the present embodiments.

The following examples pertain to further embodiments. Example 1 includes an apparatus comprising: logic circuitry to generate a first convolution kernel and a second convolution kernel based on a two-dimensional convolution kernel; a matrix processing array comprising a plurality of Fused Multiply-Add (FMA) blocks to apply the first convolution kernel to input data during a first pass to generate an intermediate data; and the matrix processing array to apply the second convolution kernel to the intermediate data to generate output data. Example 2 includes the apparatus of example 1, wherein the input data comprises image data. Example 3 includes the apparatus of example 1, wherein the first convolution kernel and the second convolution kernel each comprise a one-dimensional vector. Example 4 includes the apparatus of example 1, wherein, for an NxN two-dimensional convolution kernel, the logic circuitry is to generate an N×1 convulsion kernel and a 1×N convolution kernel. Example 5 includes the apparatus of example, wherein a subset of the plurality of FMA blocks is coupled to memory to store one or more kernel values. Example 6 includes the apparatus of example 1, wherein the matrix processing array comprises a two-dimensional matrix of the plurality of FMA blocks with each column element coupled vertically to its neighboring downstream FMA element, where data is to be stored after a last FMA element operation. Example 7 includes the apparatus of example 1, wherein a processor, having one or more processor cores, comprises the logic circuitry. Example 8 includes the apparatus of example 7, wherein the processor comprises a graphics processing unit and/or a general-purpose processor. Example 9 includes the apparatus of example 1, wherein one or more instructions are to be executed to configure, load, execute, and/or store the first and second convolution kernels on the matrix processing array. Example 10 includes the apparatus of example 1, wherein the matrix processing array is to apply the first and second convolution kernels to execute operations in one or more of: image processing, data filtering, and data encoding or decoding. Example 11 includes the apparatus of example 1, wherein the matrix processing array comprises a systolic array. Example 12 includes an apparatus comprising: logic circuitry to generate a first convolution kernel and a second convolution kernel based on a two-dimensional convolution kernel; decode circuitry to decode an instruction having a field for an operand value; and execution circuitry to execute the decoded instruction to perform one or more operations on a matrix processing array, wherein matrix processing array comprises a plurality of Fused Multiply-Add (FMA) blocks to apply the first convolution kernel to input data during a first pass to generate an intermediate data, wherein the matrix processing array is to apply the second convolution kernel to the intermediate data to generate output data. Example 13 includes the apparatus of example 12, wherein the one or more operations comprise: a load array configuration operation, a matrix load operation, a filter load operation, an array filter operation, and/or a matrix store operation. Example 14 includes the apparatus of example 12, wherein the matrix processing array comprises a systolic array.

Example 15 includes one or more non-transitory computer-readable media comprising one or more instructions that when executed on a processor configure the processor to perform one or more operations to cause: logic circuitry to generate a first convolution kernel and a second convolution kernel based on a two-dimensional convolution kernel; a matrix processing array comprising a plurality of Fused Multiply-Add (FMA) blocks to apply the first convolution kernel to input data during a first pass to generate an intermediate data; and the matrix processing array to apply the second convolution kernel to the intermediate data to generate output data. Example 16 includes the one or more computer-readable media of example 15, further comprising one or more instructions that when executed on the at least one processor configure the at least one processor to perform one or more operations to cause the first convolution kernel and the second convolution kernel to each comprise a one-dimensional vector. Example 17 includes the one or more computer-readable media of example 15, further comprising one or more instructions that when executed on the at least one processor configure the at least one processor to perform one or more operations to cause the logic circuitry to generate an N×1 convulsion kernel and a 1×N convolution kernel for an NxN two-dimensional convolution kernel.

Example 18 includes one or more non-transitory computer-readable media comprising one or more instructions that when executed on a processor configure the processor to perform one or more operations to cause: logic circuitry to generate a first convolution kernel and a second convolution kernel based on a two-dimensional convolution kernel; decode circuitry to decode an instruction having a field for an operand value; and execution circuitry to execute the decoded instruction in accordance with the operand value to perform one or more operations on a matrix processing array, wherein matrix processing array comprises a plurality of Fused Multiply-Add (FMA) blocks to apply the first convolution kernel to input data during a first pass to generate an intermediate data, wherein the matrix processing array is to apply the second convolution kernel to the intermediate data to generate output data. Example 19 includes the one or more computer-readable media of example 18, wherein the one or more operations comprise: a load array configuration operation, a matrix load operation, a filter load operation, an array filter operation, and/or a matrix store operation. Example 20 includes the one or more computer-readable media of example 18, wherein the matrix processing array comprises a systolic array.

Example 21 includes an apparatus comprising means to perform an operation as set forth in any preceding examples. Example 22 includes machine-readable storage including machine-readable instructions, when executed, to implement an operation or realize an apparatus as set forth in any preceding example.

In various embodiments, one or more operations discussed with reference to Figs. 1 et seq. may be performed by one or more components (interchangeably referred to herein as "logic") discussed with reference to any of the figures.

In various embodiments, the operations discussed herein, e.g., with reference to Figs. 1 et seq., may be implemented as hardware (e.g., logic circuitry), software, firmware, or combinations thereof, which may be provided as a computer program product, e.g., including one or more tangible (e.g., non-transitory) machine-readable or computer-readable media having stored thereon instructions (or software procedures) used to program a computer to perform a process discussed herein. The machine-readable medium may include a storage device such as those discussed with respect to the figures.

Additionally, such computer-readable media may be downloaded as a computer program product, wherein the program may be transferred from a remote computer (e.g., a server) to a requesting computer (e.g., a client) by way of data signals provided in a carrier wave or other propagation medium via a communication link (e.g., a bus, a modem, or a network connection).

Reference in the specification to "one embodiment" or "an embodiment" means that a particular feature, structure, and/or characteristic described in connection with the embodiment may be included in at least an implementation. The appearances of the phrase "in one embodiment" in various places in the specification may or may not be all referring to the same embodiment.

Also, in the description and claims, the terms "coupled" and "connected," along with their derivatives, may be used. In some embodiments, "connected" may be used to indicate that two or more elements are in direct physical or electrical contact with each other. "Coupled" may mean that two or more elements are in direct physical or electrical contact. However, "coupled" may also mean that two or more elements may not be in direct contact with each other, but may still cooperate or interact with each other.

Thus, although embodiments have been described in language specific to structural features and/or methodological acts, it is to be understood that claimed subject matter may not be limited to the specific features or acts described. Rather, the specific features and acts are disclosed as sample forms of implementing the claimed subject matter.

## Claims

1. An apparatus comprising:
logic circuitry to generate a first convolution kernel and a second convolution kernel based on a two-dimensional convolution kernel;
a matrix processing array comprising a plurality of Fused Multiply-Add (FMA) blocks to apply the first convolution kernel to input data during a first pass to generate an intermediate data; and
the matrix processing array to apply the second convolution kernel to the intermediate data to generate output data.

2. The apparatus of claim 1, wherein the input data comprises image data.

3. The apparatus of claim 1, wherein the first convolution kernel and the second convolution kernel each comprise a one-dimensional vector.

4. The apparatus of claim 1, wherein, for an NxN two-dimensional convolution kernel, the logic circuitry is to generate an N×1 convulsion kernel and a 1×N convolution kernel.

5. The apparatus of claim, wherein a subset of the plurality of FMA blocks is coupled to memory to store one or more kernel values.

6. The apparatus of claim 1, wherein the matrix processing array comprises a two-dimensional matrix of the plurality of FMA blocks with each column element coupled vertically to its neighboring downstream FMA element, where data is to be stored after a last FMA element operation.

7. The apparatus of claim 1, wherein a processor, having one or more processor cores, comprises the logic circuitry, or wherein the processor comprises a graphics processing unit and/or a general-purpose processor.

8. The apparatus of claim 1, wherein one or more instructions are to be executed to configure, load, execute, and/or store the first and second convolution kernels on the matrix processing array.

9. The apparatus of claim 1, wherein the matrix processing array is to apply the first and second convolution kernels to execute operations in one or more of: image processing, data filtering, and data encoding or decoding.

10. The apparatus of claim 1, wherein the matrix processing array comprises a systolic array.

11. An apparatus comprising:
logic circuitry to generate a first convolution kernel and a second convolution kernel based on a two-dimensional convolution kernel;
decode circuitry to decode an instruction having a field for an operand value; and
execution circuitry to execute the decoded instruction to perform one or more operations on a matrix processing array,
wherein matrix processing array comprises a plurality of Fused Multiply-Add (FMA) blocks to apply the first convolution kernel to input data during a first pass to generate an intermediate data, wherein the matrix processing array is to apply the second convolution kernel to the intermediate data to generate output data.

12. The apparatus of claim 11, wherein the one or more operations comprise: a load array configuration operation, a matrix load operation, a filter load operation, an array filter operation, and/or a matrix store operation.

13. The apparatus of claim 11, wherein the matrix processing array comprises a systolic array.

14. An apparatus comprising means to perform a method as set forth in any preceding claim.

15. Machine-readable storage including machine-readable instructions, when executed, to implement a method or realize an apparatus as set forth in any preceding claim.
